# EUROPÄISCHE PATENTSCHRIFT

(11) **EP 2 961 050 B1**
(45) Veröffentlichungstag und Bekanntmachung des Hinweises auf die Patenterteilung: **29.04.2020**
(21) Anmeldenummer: 14173866.6
(22) Anmeldetag: 25.06.2014
(51) Int. Cl.: H02M 3/158, H02M 3/337

(54) **Regelung einer Parallelschaltung zumindest zweier Resonanzwandler**
Control of a parallel connection of at least two resonant converters
Réglage d'une commutation parallèle d'au moins deux convertisseurs de courant à résonance

(43) Veröffentlichungstag der Anmeldung: 30.12.2015
(73) Patentinhaber: Siemens Aktiengesellschaft, 80333 München (DE)
(72) Erfinder: Dyszewski, Janusz, 1200 Wien (AT); Reschenauer, Stefan, 2191 Atzelsdorf (AT)
(74) Vertreter: Maier, Daniel Oliver

(56) Entgegenhaltungen:
- JP-A- 2004 056 838
- US-A- 6 144 194
- US-A1- 2009 284 991
- US-A1- 2011 316 508
- US-A1- 2012 069 605
- US-A1- 2013 134 953
- "Analysis of the half-bridge boost rectifier as integrated electronic ballast with power factor correction", POWER ELECTRONICS SPECIALISTS CONFERENCE, 2001. PESC, Bd. 2, 17. Juni 2001 (2001-06-17), - 21. Juni 2001 (2001-06-21), Seiten 707-712, XP002731658, ISSN: 0275-9306, DOI: 10.1109/PESC.2001.954201 ISBN: 0-7803-7067-8

## Beschreibung

### GEBIET DER ERFINDUNG

Die Erfindung betrifft ein Verfahren zur Regelung einer Parallelschaltung zumindest zweier Resonanzwandler, wobei eingangsseitig Eingangsströme der Resonanzwandler abgegriffen und deren Differenzstrom ermittelt wird. Darüber hinaus offenbart die vorliegende Anmeldung eine Schaltung zur Regelung einer solchen Parallelschaltung.

Üblicherweise werden Resonanzwandler (im Englischen auch als "resonant converter" bezeichnet) in der elektrischen Energietechnik bzw. zur Energieübertragung verwendet und stellen eine spezielle schaltungstechnische Form eines Gleichspannungswandlers dar, welcher zur Energieübertragung mit einem Schwingkreis arbeitet, wobei ein Resonanzwandler im Gegensatz zu Umformern ohne mechanisch bewegte Teile arbeitet. Dabei wandelt der Resonanzwandler eine Gleichspannung in eine ein- oder mehrphasige Wechselspannung um, wobei er für einen optimalen Betrieb typischerweise mit annähernd konstanter Last betrieben wird. Üblicherweise sorgt ein Resonanzkreis dafür, dass die Transistoren, beispielsweise Bipolar-Transistoren, MOS-FETs, IGBTs u.dgl., eines Resonanzwandlers im Strom- und/oder Spannungsnulldurchgang ausgeschaltet werden, wobei man zwischen ZVS (Zero Voltage Switching) Resonanzwandlern und ZCS (Zero Current Switching) Resonanzwandlern unterscheidet, das heißt, Resonanzwandler, die im Spannungsnulldurchgang und/oder im Stromnulldurchgang schalten, wobei meist beides zusammenfällt. Erfolgt keine Gleichrichtung am Ausgang, so bezeichnet man den Resonanzwandler auch als Wechselrichter (im Englischen auch als "inverter" bezeichnet).

Dabei hat eine Parallelschaltung von Resonanzwandlern den Vorteil eines modularen Aufbaues, wodurch kleinere Transformatoren einsetzbar sind. Daraus ergibt sich der Vorteil eines kleineren Gewichts sowie einer einfacheren Wärmeabfuhr, da eine größere Oberfläche zur Wärmeübertragung zur Verfügung steht. Darüber hinaus treten im Teillastbetrieb geringere Verluste auf, da ein Wandler gegebenenfalls abgeschaltet werden kann.

### STAND DER TECHNIK

Der Resonanzkreis eines Resonanzwandlers ist im Schaltungsaufbau entweder primär- oder sekundärseitig angeordnet, davon abhängig wird der Wandler im Strom- und/oder im Spannungsnulldurchgang geschaltet. Dies hängt jedoch davon ab, ob ein Serien- oder ein Parallelresonanzkreis eingesetzt wird, wobei die energieübertragende Strecke im Bereich ihres Resonanzpunktes betrieben wird. Die leistungsübertragende Strecke mit dem Transformator bildet einen Schwingkreis mit zusätzlichen Kapazitäten und Induktivitäten, durch welche der Bereich der Schaltfrequenz mitbestimmt wird und so die Verlustleistung während der Schaltvorgänge minimiert wird.

Die Resonanzwandler können abhängig von der Anwendung als LLC(=LCL)- oder LCC-Konverter ausgebildet sein, wobei der LCL-Konverter eine geringe Verlustleistung und einen guten Wirkungsgrad gewährleistet. Üblicherweise wird für das Aufladen ein LCC-Resonanzkreis und für das Rückspeisen ein LLC-Resonanzkreis eingesetzt, zwischen denen mit Hilfe eines Schaltelements umgeschaltet wird. Hierbei kann durch den integrierten Resonanzwandler ein nahezu sinusförmiger Strom erzeugt werden, wobei eine induktive Blindleistung zum Erreichen des Nullspannungsschaltens bereitgestellt wird, wodurch starke Verluste vermieden werden und der Wirkungsgrad hoch gehalten wird.

Zur Regelung der Ausgangsspannung werden Resonanzwandler üblicherweise mit einem festen Tastverhältnis und variabler Frequenz angesteuert.

Die Regelung mit festem Tastverhältnis wird in US6144194 beschrieben, wobei entweder die Eingangsströme oder die Ausgangsströme gemessen und ihre Differenzen gebildet werden. Um den Betrieb parallelgeschalteter Resonanzwandler mit veränderlicher Schaltfrequenz und Messung des gesamten Ausgangsstromes geht es in JP2004056838.

Anwendung finden solche Resonanzwandler beispielsweise als elektronische Vorschaltgeräte bei Leuchtstofflampen, um eine für den Betrieb der Leuchtstofflampe notwendige hohe Spannung zu erzeugen. Des Weiteren dienen Wechselrichter häufig zur Stromversorgung von Leuchtröhren, wie sie beispielsweise zur Hintergrundbeleuchtung von TFT-Flachbildschirmen verwendet werden.

Die Speisung erfolgt üblicherweise mit Hilfe eines Resonanzkreises, der es ermöglicht, dass die Transistoren trotz der Sinusform der Transformatorspannung stets ganz durchschalten können, wodurch die Verluste gering und der Wirkungsgrad hoch gehalten wird.

Gemäß obiger Erläuterung verhält sich ein Resonanzwandler vereinfacht ausgedrückt wie eine Spannungsquelle, wobei sich bei Parallelschaltung zweier Resonanzwandler die Ausgangsströme unter einer veränderlichen Last nicht gleichmäßig auf die Wandler aufteilen.

Um dieses Problem zu lösen gibt es derzeit zwei bekannte Ansätze, wobei keiner eine vollständig zufriedenstellende Lösung darstellt.

Die erste Möglichkeit dieses Problem zu lösen ist zwei Resonanzwandler auf der Primärseite in Serie und auf der Sekundärseite parallel zu schalten. Somit erhält derjenige Resonanzwandler mit der etwas geringeren Ausgangsspannung eine höhere Eingangsspannung, wodurch beide Resonanzwandler gleich stark belastet werden. Nachteilig hierbei ist eine fehlende Modularität, da bei Verwendung nur eines Wandlers dieser mit einer doppelten Eingangsspannung arbeiten muss, während zwei Wandler mit lediglich der halben Spannung arbeiten.

Eine weitere Möglichkeit besteht darin eine Drossel einzusetzen. Im Detail werden dabei die Eingangsströme der beiden parallel geschalteten Resonanzwandler gemessen und ein daraus resultierender Differenzstrom einem der beiden parallel geschalteten Resonanzwandler, welcher mit einer stromgesteuerten Drossel (Resonanzinduktivität) ausgestattet ist, zugeführt, wodurch der Resonanzwandler entweder tief- oder hochgeregelt wird. Da jedoch magnetische Bauteile teuer sind, ist diese Lösung mit hohen Kosten verbunden. Des Weiteren weist diese Lösung den Nachteil auf, dass für die zusätzliche Drossel ein hoher Platzbedarf und somit eine höheres Gewicht erforderlich ist.

### DARSTELLUNG DER ERFINDUNG

Es ist daher eine Aufgabe der Erfindung, ein Verfahren und eine zugehörige Schaltung zu schaffen, durch welche die Ausgangsspannung bzw. die Ausgangsströme zumindest zweier parallelgeschalteter Resonanzwandler unter einer veränderlichen oder gleichbleibenden Last gleich sind, ohne dass ein zusätzlicher größerer Platzbedarf erforderlich ist. Darüber hinaus sollen die Kosten einer solchen Ausführungsform möglichst gering gehalten werden.

Diese Aufgabe wird durch ein Verfahren nach Anspruch 1 gelöst, indem der Differenzstrom einem Regler des einen Resonanzwandlers oder beiden (bzw. allen) Resonanzwandlern zugeführt und eine Schaltfrequenz derart verändert wird, dass ein Ausgangsstrom des einen Resonanzwandlers unter einer veränderlichen Last gleich dem Ausgangsstrom des anderen Resonanzwandlers ist.

Hierbei wird die Schaltfrequenz zumindest zweier Schalter zumindest eines Resonanzwandlers verändert bzw. sind die Regler der Resonanzwandler jeweils an zumindest zwei Schalter angeschlossen, wobei die Schalter beispielsweise als MOS-FET, IGBT oder Bipolartransistor ausgebildet sind.

Dabei wird zur Änderung der Schaltfrequenz zumeist ein spannungsgesteuerter Oszillator (VCO = Voltage Controlled Oscillator), z.B. ein RC-Oszillator, verwendet, wobei die Frequenz des Ausgangssignals des spannungsgesteuerten Oszillators die doppelte Schaltfrequenz des Resonanzwandlers aufweist. Die Schaltfrequenz wird mit Hilfe einer Änderung der Eingangsspannung des spannungsgesteuerten Oszillators geändert.

In einer bevorzugten Ausführungsform werden die Schalter mit einem festen Tastverhältnis und einer variablen Frequenz angesteuert. Dies dient dazu, dass die Pulslänge gleich der halben Schwingungsdauer des Resonanzkreises ist, sodass im Schwingungsnulldurchgang die Schalter, welche vorzugsweise als MOS-FET ausgebildet sind, wieder ausgeschaltet werden können.

Darüber hinaus umfasst die vorliegende Erfindung eine Schaltung nach Anspruch 4 zur Regelung einer Parallelschaltung zumindest zweier Resonanzwandler mit je einem Regler und zumindest zwei Schaltern, umfassend zumindest einen Differenzstrommesser, welcher eingangsseitig mit Eingängen der Resonanzwandler verbunden ist. Dabei ist der Differenzstrommesser ausgangsseitig mit dem Regler zumindest eines Resonanzwandlers verbunden, wobei der Regler dazu ausgebildet ist, die Schaltfrequenz des Resonanzwandlers derart zu verändern, dass die Ausgangsströme und somit die Ausgangsspannung beider parallelgeschalteter Resonanzwandler gleich sind. Die Regler der Resonanzwandler sind jeweils an die zumindest zwei Schalter angeschlossen.

Dabei ist es in einer alternativen Ausführungsform auch möglich, dass der Differenzstrommesser ausgangsseitig mit den Reglern aller Resonanzwandler verbunden ist.

In einer weiteren erfindungsgemäßen Ausführungsform ist vor den Resonanzwandlern eingangsseitig jeweils ein Shunt zum Abgriff der Eingangsströme für den Differenzstrommesser angeschlossen. Bei einem Shunt handelt es such um einen niederohmigen elektrischen Widerstand, welcher zur Messung des elektrischen Stromes verwendet wird, weshalb er auch als Messwiderstand bezeichnet wird. Der Strom, der durch einen Shunt fließt, verursacht einen messbaren proportionalen Spannungsabfall.

In einer alternativen Ausführungsform zum Shunt kann auch vorgesehen sein, dass Stromwandler zum Einsatz kommen, etwa, dass der Differenzstrommesser vor den Resonanzwandlern eingangsseitig zumindest einen Stromwandler für die Eingangsströme umfasst.

In einer möglichen Ausführungsvariante des Differenzstrommessers umfasst dieser zumindest einen OPV (Operationsverstärker). Der OPV wird jeweils an einem Shunt angelegt und die Ausgänge der OPV dienen als Eingänge eines Differentialverstärkers (der ebenfalls als OPV ausgeführt sein kann), wodurch die Differenzstrommessung realisiert wird. Eine Alternative zu einer mit Operationsverstärker aufgebauten Schaltung stellt eine diskrete Schaltung mit Transistoren und Dioden dar.

In einer weiteren Ausführungsform wäre eine digitale Lösung für die Differenzstrommessung denkbar.

Durch die Verwendung einer einfachen Regelung zur Veränderung der Schaltfrequenz eines Resonanzwandlers statt des Einsatzes einer stromgesteuerten Drossel ergibt sich somit der Vorteil, dass keine teuren magnetischen Bauteile notwendig sind, wodurch zusätzlicher Platz gespart wird.

In der Regel werden nur zwei Resonanzwandler parallel geschaltet. Es wäre aber auch möglich, mehrere Resonanzwandler parallel zu schalten und Differenzströme zwischen einem ersten und allen weiteren Resonanzwandlern zu ermitteln und die Schaltfrequenzen eines oder mehrerer weiterer Resonanzwandler entsprechend zu ändern.

Die Regler der Resonanzwandler können ebenfalls zumindest einen OPV enthalten, wobei alternativ dazu eine diskrete Schaltung mit Transistoren und Dioden einsetzbar ist. Dabei wird die Frequenz beispielsweise mit Hilfe der Signale des - auf der Sekundärseite befindlichen - Synchrongleichrichters geregelt, wobei üblicherweise die Resonanzwandler mit Hilfe von Signalen von der Primärseite geregelt werden. Dabei wird bei Verwendung der Signale der auf der Sekundärseite befindlichen Synchrongleichrichter z.B. derart geregelt, dass die Einschaltzeit des ersten und des zweiten Gleichrichters (also Schalters) inkl. einer dazwischen liegenden Totzeit (tiefpassgefiltert) gleich groß der Einschaltzeit des ersten und zweiten Synchrongleichrichters inkl. einer dazwischen liegenden Totzeit (tiefpassgefiltert) ist.

### KURZE BESCHREIBUNG DER FIGUREN

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Dabei zeigt:

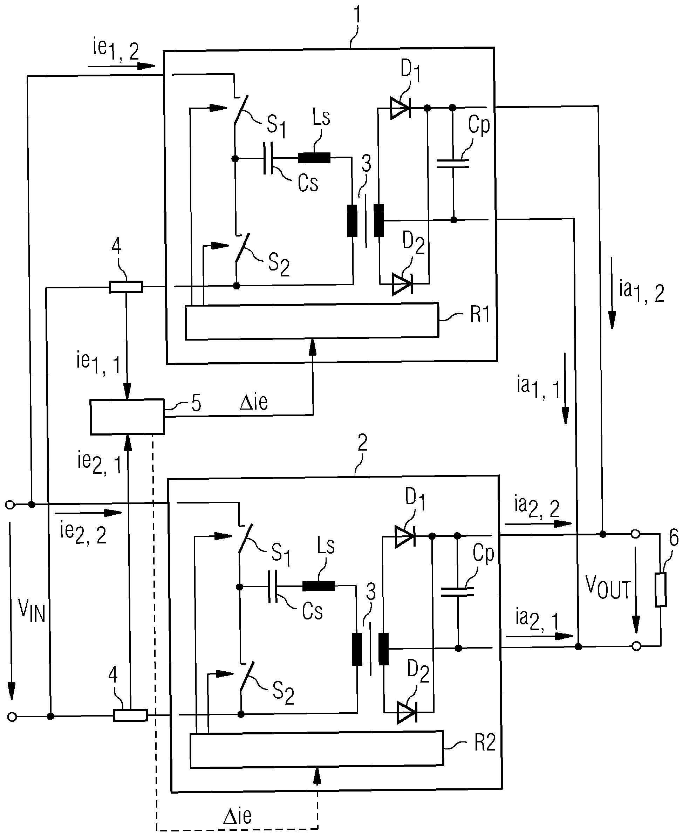

- Fig. 1: eine schematische Darstellung des prinzipiellen Schaltungsaufbaues zweier parallel geschalteter Resonanzwandler.

### WEGE ZUR AUSFÜHRUNG DER ERFINDUNG

In Fig. 1 sind zwei parallelgeschaltete Resonanzwandler 1,2 dargestellt, wobei der Spannungs- und Stromverlauf durch einen Überträger 3 und durch den Resonanzkreis bestehend aus einer Resonanzkapazität Cs und einer Resonanzinduktivität Ls definiert wird, wobei Schalttransistoren S1 und S2 als alternierende Schalter mit einer Totzeit von ca. einem Prozent der Resonanzperiode verwendet werden.

Dabei liegt an der Parallelschaltung der beiden unabhängigen Resonanzwandler 1,2 eine Eingangs- bzw. eine Zwischenkreisspannung V_{IN} an, wodurch ausgangsseitig an einer Last 6 eine mittels der beiden Überträger 3 übersetzte Ausgangsspannung V_{OUT} entsteht. Dabei handelt es sich bei den Überträgern 3 vorzugsweise jeweils um einen Transformator, hier mit Mittelpunktanzapfung, wobei in einer alternativen Ausführungsform statt Transformatoren auch Brückengleichrichter mit einer einfachen Wicklung einsetzbar sind.

Darüber hinaus sind die parallelgeschaltete Resonanzwandler 1,2 eingangsseitig jeweils an einem zu dem jeweiligen Resonanzwandler 1,2 zugehörigen Regler R1,R2 angeschlossen.

Um das Problem einer ungleichmäßigen Verteilung der Ausgangsströme ia₁,ia₂ der Resonanzwandler 1,2 unter einer veränderlichen Last 6 zu vermeiden, wird ein aus den gemessenen Eingangsströmen ie₁,ie₂ der Resonanzwandler 1,2 resultierender Differenzstrom Δie dem Regler R1, welcher einen Anschluss für den Differenzstrom Δie aufweist, des einen Resonanzwandlers 1 zugeführt und eine Schaltfrequenz des Resonanzwandlers 1 derart verändert, dass der Ausgangsstrom ia_{1,1},ia_{1,2} des einen Resonanzwandlers 1 unter einer veränderlichen Last 6 gleich dem Ausgangsstrom ia_{2,1},ia_{2,2} des anderen Resonanzwandlers 2 ist.

Dadurch wird die Schaltfrequenz von zumindest dem einen Resonanzwandler 1 bzw. dessen Schaltern S1,S2 tief- oder hochgeregelt, sodass sich die Ausgangsströme ia_{1,1}, ia_{1,2}; ia_{2,1}, ia_{2,2} gleichmäßig unter Last auf die beiden Resonanzwandler 1,2 aufteilen.

Analog könnte der Differenzstrom Δie nur dem Regler R2, welcher einen Anschluss für den Differenzstrom Δie aufweist, des anderen Resonanzwandlers 2 zugeführt werden, und die Schaltfrequenz der Schalter S1, S2 des Resonanzwandlers 2 derart verändert werden, dass der Ausgangsstrom ia_{2,1},ia_{2,2} des Resonanzwandlers 2 unter einer veränderlichen Last 6 gleich dem Ausgangsstrom ia_{1,1},ia_{1,2} des anderen Resonanzwandlers 1 ist.

Es ist auch möglich, dass der Differenzstrom Δie allen Reglern R1,R2 der zumindest zwei parallelgeschalteten Resonanzwandlern 1,2 zugeführt wird, wodurch jeder Regler R1,R2 in Abhängigkeit der anderen Regler R1,R2 die Schaltfrequenz des ihm zugehörigen Resonanzwandlers 1,2 derart ändert, dass alle Resonanzwandler 1,2 die gleichen Ausgangsströme ia_{1,1}, ia_{1,2}; ia_{2,1}, ia_{2,2} aufweisen.

Um die erfindungsgemäße Regelung jedoch zu ermöglichen, ist im vorliegenden Beispiel vor den Resonanzwandlern 1,2 eingangsseitig jeweils ein Shunt 4 zum Abgriff der Eingangsströme ie_{1,1};ie_{2,1} für den Differenzstrommesser 5 angeschlossen. Der Differenzstrommesser 5 umfasst hier pro Shunt 4 einen OPV, die Ausgänge der OPV dienen als Eingänge eines Differentialverstärkers, der ebenfalls als OPV ausgeführt ist, wodurch die Differenzstrommessung realisiert wird. Das Signal des Differentialverstärkers wird dem Regler R1 bzw. R2 zugeführt. Als Alternative zu einer Schaltung mit Operationsverstärker ist eine diskrete Schaltung mit Transistoren und Dioden einsetzbar.

In dem in Fig. 1 dargestellten Fall wird der Differenzstrom Δie dem Regler R1 des ersten Resonanzwandlers 1 zugeführt, wodurch der Resonanzwandler 1 seine Schaltfrequenz derart ändert, dass beide parallelgeschalteten Resonanzwandler 1,2 die gleichen Ausgangsströme und in Folge auch die gleichen Ausgangspannungen ia_{1,1}, ia_{1,2}; ia_{2,1}, ia_{2,2} aufweisen.

Im Detail sind die Regler R1,R2 mit den Schaltern S1,S2, wobei es sich üblicherweise um Transistoren, vorzugsweise um MOS-FETs, handelt, der Resonanzwandler 1,2 verbunden, wodurch mittels der Regler R1,R2 die Schaltfrequenz zumindest zweier Schalter S1,S2 verändert wird. Mit anderen Worten nutzt man die Möglichkeit der Regelung der Schaltfrequenzen in einem gewissen Bereich mit Hilfe der Ausgangsspannung der Resonanzwandler 1,2, wobei die Regler R1,R2 der Resonanzwandler 1,2 jeweils an zumindest zwei Schalter S1,S2 angeschlossen sind.

Dabei werden die Schalter S1,S2 mit einer festen Pulslänge und einer variablen Frequenz angesteuert.

Analog zur Parallelschaltung mit stromgesteuerter Resonanzdrossel nach dem Stand der Technik werden die Resonanzwandler 1,2 erfindungsgemäß sowohl primär als auch sekundär parallel geschaltet. Es werden die Eingangsströme der Resonanzwandler 1,2 gemessen und mit Hilfe eines Differenzverstärkers im Differenzstrommesser 5 eine Korrekturspannung gebildet, die dem Sollwert des Reglers R1 bzw. R2 des Resonanzwandlers 1 bzw. 2 zugeführt wird. Dies bewirkt, dass die Wandler-Schaltfrequenz derart beeinflusst wird, dass sich gleiche Wandlereingangsströme ergeben. In weiterer Folge sind die Ausgangsströme der Schaltwandler ebenfalls gleich. Es ergibt sich eine ideale Ausnutzung der Resonanzüberträger 3, folglich geringerer Platzbedarf und erhebliche Einsparungen bei Gewicht und Kosten.

Die Sollwerte der Regler R1, R2 werden von Standard-Steuerbausteinen für Resonanzwandler mit einstellbarer Totzeit vorgegeben, diese Bauteile werden oft auch Resonanz-IC oder "resonant controller" bezeichnet. Sie besitzen zwei Gegentakt (push-pull) Ausgänge, wobei ICs mit oder ohne Leistungstreiber verfügbar sind. Sollte kein integrierter Leistungstreiber vorhanden sein, müssen zusätzliche Treibertransistoren (MOSFET, Bipolar, ...) verwendet werden, um die von hohen Eingangskapazitäten behafteten Leistungsschalter ansteuern zu können. Es wäre auch denkbar, dass die Schaltfrequenz der Schalter S1, S2 durch Signale des Synchrongleichrichters auf der Sekundärseite erfolgt.

Die Steuerung der Sekundärseite, also der Synchrongleichrichter, hier durch Schalter in Form von Dioden D1 und D2 symbolisch dargestellt, erfolgt über Standardbauteile zur Steuerung von selbstgeführten Synchrongleichrichtern.

Für eine Anwendung im Leistungsbereich 500W bei 400-800V Gleichspannung sind MOS-FETs die gängigste wie auch gleichzeitig die beste Wahl für die Schalter S1, S2. Für höhere Leistung im Bereich >>1kW sind auch IGBTs verwendbar, wobei hierbei eine Reduzierung der Schaltfrequenz notwendig wird. Bei Eingangsspannungen bis etwa 1000V bestehen keinerlei Gründe, andere Bauelemente als N-Kanal MOS-FETs zu verwenden. Sollte die Eingangsspannung höher als 1000V sein, ist es notwendig, IGBTs in Betracht zu ziehen. Bipolare Transistoren sind für eine Anwendung im Leistungsbereich tendenziell zu langsam, verursachen höhere Verluste beim Schalten und benötigen bei diesen Spannungen hohen Steuerstrom durch die bauteilbedingte geringe Stromverstärkung.

### Bezugszeichenliste:

- 1: erster Resonanzwandler;
- 2: zweiter Resonanzwandler;
- 3: Überträger;
- 4: Shunt;
- 5: Differenzstrommesser;
- 6: veränderliche Last;
- ie_{1,1}: Eingangsstrom des ersten Resonanzwandlers 1;
- ie_{1,2}: Eingangsstrom des ersten Resonanzwandlers 1;
- ie_{2,1}: Eingangsstrom des zweiten Resonanzwandlers 2;
- ie_{2,2}: Eingangsstrom des zweiten Resonanzwandlers 2;
- ia_{1,1}: Ausgangsstrom des ersten Resonanzwandlers 1;
- ia_{1,2}: Ausgangsstrom des ersten Resonanzwandlers 1;
- ia_{2,1}: Ausgangsstrom des zweiten Resonanzwandlers 2;
- ia_{2,2}: Ausgangsstrom des zweiten Resonanzwandlers 2;
- Δie: Differenzstrom;
- R1: Regler des ersten Resonanzwandlers 1;
- R2: Regler des zweiten Resonanzwandlers 2;
- S1: erster Schalter (Schalttransistor);
- S2: zweiter Schalter (Schalttransistor);
- Cs: Resonanzkapazität;
- Cp: Ausgangsfilterkapazität;
- Ls: Resonanzinduktivität;
- D₁: erste Diode;
- D₂: zweite Diode;
- V_{IN}: Eingangs- bzw. Zwischenkreisspannung;
- V_{OUT}: Ausgangsspannung;

## Patentansprüche

1. Verfahren zur Regelung einer Parallelschaltung zumindest zweier Resonanzwandler (1,2), wobei eingangsseitig Eingangsströme (ie_{1,1};ie_{2,1}) der Resonanzwandler (1,2) abgegriffen und deren Differenzstrom (Δie) ermittelt wird, wobei der Differenzstrom (Δie) einem Regler (R1, R2) zumindest eines Resonanzwandlers (1, 2) zugeführt wird,
**dadurch gekennzeichnet, dass** eine Schaltfrequenz zumindest zweier Schalter (S₁,S₂) zumindest eines Resonanzwandlers (1,2) derart verändert wird, dass der Ausgangsstrom (ia_{1,1},ia_{1,2};ia_{2,1},ia_{2,2}) des einen Resonanzwandlers (1,2) unter einer veränderlichen Last (6) gleich dem Ausgangsstrom (ia_{1,1},ia_{1,2}; ia_{2,1},ia_{2,2}) des anderen Resonanzwandlers (1,2) ist.

2. Verfahren nach Anspruch 1, **dadurch gekennzeichnet, dass** die Änderung der Schaltfrequenz mit einem spannungsgesteuerten Oszillator erfolgt.

3. Verfahren nach einem der Ansprüche 1 bis 2, **dadurch gekennzeichnet, dass** die Schalter (S1, S2) mit einem festen Tastverhältnis und einer variablen Frequenz angesteuert werden.

4. Schaltung zur Regelung einer Parallelschaltung zumindest zweier Resonanzwandler (1,2) mit je einem Regler (R1, R2) und zumindest zwei Schaltern (S1, S2), umfassend zumindest einen Differenzstrommesser (5), welcher eingangsseitig mit Eingängen der Resonanzwandler (1,2) verbunden ist, wobei der Differenzstrommesser (5) ausgangsseitig mit dem Regler (R1, R2) zumindest eines Resonanzwandlers (1,2) verbunden ist,
**dadurch gekennzeichnet, dass** der Regler (R1, R2) dazu ausgebildet ist, die Schaltfrequenz der zumindest zwei Schalter (S₁,S₂) von zumindest einem Resonanzwandler (1,2) derart zu verändern, dass die Ausgangsströme (ia_{1,1},ia_{1,2}; ia_{2,1},ia_{2,2}) beider parallelgeschalteter Resonanzwandler gleich sind, wobei die Regler (R1,R2) der Resonanzwandler (1,2) jeweils an die zumindest zwei Schalter (S₁,S₂) angeschlossen sind.

5. Schaltung nach Anspruch 4, **dadurch gekennzeichnet, dass** der Differenzstrommesser (5) ausgangsseitig mit den Reglern (R1, R2) aller Resonanzwandler (1,2) verbunden ist.

6. Schaltung nach Anspruch 4 oder 5, **dadurch gekennzeichnet, dass** vor den Resonanzwandlern (1,2) eingangsseitig jeweils ein Shunt (4) zum Abgriff der Eingangsströme (iθ_{1,1};ie_{2,1}) für den Differenzstrommesser (5) angeschlossen ist.

7. Schaltung nach Anspruch 4 oder 5, **dadurch gekennzeichnet, dass** der Differenzstrommesser (5) vor den Resonanzwandlern (1,2) eingangsseitig einen Stromwandler für die Eingangsströme (ie_{1,1};ie_{2,1}) umfasst.

8. Schaltung nach einem der Ansprüche 4 bis 7, **dadurch gekennzeichnet, dass** der Differenzstrommesser (5) zumindest einen Operationsverstärker, OPV, umfasst.

## Claims

1. Method for controlling a parallel connection of at least two resonance converters (1, 2), wherein input currents (ie_{1,1}; ie_{2,1}) of the resonance converters (1, 2) are tapped on the input side and their differential current (Δie) is determined, wherein the differential current (Δie) is fed to a controller (R1, R2) of at least one resonance converter (1, 2), **characterised in that** a switching frequency of at least two switches (S₁, S₂) of at least one resonance converter (1, 2) is changed such that the output current (ia_{1.1}, ia_{1.2}; ia_{2.1}, ia_{2.2}) of the one resonance converter (1, 2) under a variable load (6) is equal to the output current (ia_{1.1}, ia_{1.2}; ia_{2.1}, ia_{2.2}) of the other resonance converter (1, 2).

2. Method according to claim 1, **characterised in that** the switching frequency is changed using a voltage-controlled oscillator.

3. Method according to one of claims 1 to 2, **characterised in that** the switches (S1, S2) are actuated with a fixed duty factor and a variable frequency.

4. Circuit for controlling a parallel connection of at least two resonance converters (1, 2), each having a controller (R1, R2) and at least two switches (S1, S2), comprising at least one differential current meter (5) which is connected on the input side to inputs of the resonance converters (1, 2), wherein the differential current meter (5) is connected on the output side to the controller (R1, R2) of at least one resonance converter (1, 2), **characterised in that** the controller (R1, R2) is embodied to change the switching frequency of the at least two switches (S₁, S₂) of at least one resonance converter (1, 2) such that the output currents (ia_{1.1}, ia_{1.2}; ia_{2.1}, ia_{2.2}) of both parallel-connected resonance converters are the same, wherein the controllers (R1, R2) of the resonance converters (1, 2) are in each case connected to the at least two switches (S₁, S₂).

5. Circuit according to claim 4, **characterised in that** the differential current meter (5) is connected on the output side to the controllers (R1, R2) of all resonance converters (1, 2).

6. Circuit according to claim 4 or 5, **characterised in that** in each case a shunt (4) for tapping the input currents (ie_{1.1}; ie_{2.1}) for the differential current meter (5) is connected upstream of the resonance converters (1, 2) on the input side.

7. Circuit according to claim 4 or 5, **characterised in that** the differential current meter (5) upstream of the resonance converters (1, 2) comprises on the input side a current converter for the input currents (ie_{1.1}; ie_{2.1}).

8. Circuit according to one of claims 4 to 7, **characterised in that** the differential current meter (5) comprises at least one operational amplifier, OPA.

## Revendications

1. Procédé de réglage d'un montage en parallèle d'au moins deux convertisseurs à résonance (1,2), des courants d'entrée (ie_{1,1} ; ie_{2,1}) des convertisseurs à résonance (1,2) étant captés côté entrée et leur courant différentiel (Δie) étant déterminé, le courant différentiel (Δie) étant amené à un régulateur (R1, R2) d'au moins un convertisseur à résonances (1, 2), **caractérisé en ce qu'**une fréquence de commutation d'au moins deux commutateurs (S1,S2) d'au moins un convertisseur à résonance (1,2) subit une modification telle que le courant de sortie (ia_{1,1}, ia_{1,2} ;ia_{2,1}, ia_{2,2}) de l'un des convertisseurs à résonance (1,2) est, sous une charge variable (6), égal au courant de sortie (ia_{1,1}, ia_{1,2} ;ia_{2,1}, ia_{2,2}) de l'autre convertisseur à résonance (1,2).

2. Procédé selon la revendication 1, **caractérisé en ce que** la modification de la fréquence de commutation se fait au moyen d'un oscillateur commandé en tension.

3. Procédé selon l'une des revendications 1 à 2, **caractérisé en ce que** les commutateurs (S1, S2) sont commandés avec un rapport cyclique fixe et une fréquence variable.

4. Circuit de réglage d'un montage en parallèle d'au moins deux convertisseurs à résonance (1,2) avec chacun un régulateur (R1, R2) et au moins deux commutateurs (S1, S2), comprenant au moins un dispositif de mesure de courant différentiel (5) qui est relié, côté entrée, à des entrées des convertisseurs à résonance (1, 2), le dispositif de mesure de courant différentiel (5) étant, côté sortie, relié au régulateur (R1, R2) d'au moins un convertisseur à résonances (1,2), **caractérisé en ce que** le régulateur (R1, R2) est conçu pour modifier la fréquence de commutation des au moins deux commutateurs (S1,S2) d'au moins un convertisseur à résonance (1,2) de manière telle que les courants de sortie (ia_{1,1}, ia_{1,2} ;ia_{2,1}, ia_{2,2}) des deux convertisseurs à résonance montés en parallèle sont identiques, les régulateurs (R1,R2) des convertisseurs à résonance (1,2) étant raccordés respectivement aux au moins deux commutateurs (S1,S2).

5. Circuit selon la revendication 4, **caractérisé en ce que** le dispositif de mesure de courant différentiel (5) est relié, côté sortie, aux régulateurs (R1, R2) de tous les convertisseurs à résonance (1,2).

6. Circuit selon la revendication 4 ou 5, **caractérisé en ce qu'**est raccordé, en amont des convertisseurs à résonance (1,2), côté entrée, respectivement un shunt (4) pour capter les courants d'entrée (ie_{1,1} ; ie_{2,1}) pour le dispositif de mesure de courant différentiel (5).

7. Circuit selon la revendication 4 ou 5, **caractérisé en ce que** le dispositif de mesure de courant différentiel (5) comprend, en amont des convertisseurs à résonance (1,2), côté entrée, un convertisseur de courant pour les courants d'entrée (ie_{1,1} ; ie_{2,1}).

8. Circuit selon l'une des revendications 4 à 7, **caractérisé en ce que** le dispositif de mesure de courant différentiel (5) comprend au moins un amplificateur opérationnel, OPV.
